# EUROPEAN PATENT APPLICATION

(11) **EP 4 783 243 A1**
(43) Date of publication of application: **29.07.2026**
(21) Application number: 25869644.2
(22) Date of filing: 05.12.2025
(51) Int. Cl.: H01M 4/04, H01M 4/139, H01M 10/052

(54) **APPARATUS FOR MANUFACTURING PRELITHIATED ELECTRODE, LITHIUM SECONDARY BATTERY COMPRISING PRELITHIATED ELECTRODE, AND METHOD FOR MANUFACTURING PRELITHIATED ELECTRODE**

(30) Priority: 06.12.2024 KR 20240180173; 04.12.2025 KR 20250190155
(71) Applicant: LG ENERGY SOLUTION, LTD., Seoul 07335 (KR)
(72) Inventor: LEE, Ilha, Daejeon 34122 (KR); JOO, Mun Kyu, Daejeon 34122 (KR); HONG, Doyoung, Daejeon 34122 (KR); KWON, Yohan, Daejeon 34122 (KR); CHAE, Jonghyun, Daejeon 34122 (KR)
(74) Representative: Hoffmann Eitle
(86) International application number: PCT/KR2025/020802
(87) International publication number: WO 2026/121904

(57) **Abstract**

The present invention relates to an apparatus for manufacturing a pre-lithiated electrode including: a traveling unit along which an electrode having electrode active material layers on both surfaces of an electrode current collector layer travels; a lamination unit configured to laminate a transfer laminate including a lithium metal layer and a base layer such that the lithium metal layer comes into contact with each of the electrode active material layers, at a first side surface and a second side surface of the traveling unit; a first peeling unit including a first peeling roll configured to peel the base layer from the transfer laminate at the first side surface of the traveling unit; and a second peeling unit including a second peeling roll configured to peel the base layer from the transfer laminate at the second side surface of the traveling unit, wherein among points on the electrode having a shortest distance from a center of the first peeling roll to the electrode traveling along the first side surface of the traveling unit, an upstreammost point P, and among points on the electrode having a shortest distance from a center of the second peeling roll to the electrodes traveling along the second side surface of the traveling unit, a downstreammost point Q are different from each other, and the traveling unit at the point P and the traveling unit at the point Q are located on different straight lines.

## Description

### [Technical Field]

This application claims priority to and the benefit of Korean Patent Application No. 10-2024-0180173 filed in the Korean Intellectual Property Office on December 6, 2024 and Korean Patent Application No. 10-2025-0190155 filed in the Korean Intellectual Property Office on December 4, 2025, the entire contents of which are incorporated herein by reference.

The present invention relates to an apparatus for manufacturing a pre-lithiated electrode, a lithium secondary battery including a pre-lithiated electrode, and a method for manufacturing a pre-lithiated electrode.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is actively being conducted on a method of manufacturing a high-density electrode with a higher energy density per unit volume as an electrode for such high-capacity lithium secondary batteries, and the trend is shifting toward higher loading to improve energy density.

In general, a secondary battery includes a positive electrode, a negative electrode, a separator interposed between the positive electrode and the negative electrode, an electrolyte, and the like. In addition, an electrode such as a positive electrode and a negative electrode may include an electrode active material layer provided on an electrode current collector layer.

Note that lithium secondary batteries undergo lithium loss from the first charge after a battery is manufactured. During subsequent charging and discharging cycles and high-temperature storage periods, lithium loss continues to occur, albeit in very small amounts, thereby causing progressive degradation of the battery. To compensate for such lithium loss, lithium is additionally introduced into a battery before the battery is operated, which is called pre-lithiation.

### [Detailed Description of the Invention]

### [Technical Problem]

The present invention has been made in an effort to provide an apparatus for manufacturing a pre-lithiated electrode capable of improving transfer characteristics and increasing a process speed, a lithium secondary battery including a pre-lithiated electrode, and a method for manufacturing a pre-lithiated electrode.

### [Technical Solution]

An exemplary embodiment of the present specification provides an apparatus for manufacturing a pre-lithiated electrode, including:
a traveling unit along which an electrode having electrode active material layers on both surfaces of an electrode current collector layer travels;
a lamination unit configured to laminate a transfer laminate including a lithium metal layer and a base layer such that the lithium metal layer comes into contact with each of the electrode active material layers, at a first side surface and a second side surface of the traveling unit;
a first peeling unit including a first peeling roll configured to peel the base layer from the transfer laminate at the first side surface of the traveling unit; and
a second peeling unit including a second peeling roll configured to peel the base layer from the transfer laminate at the second side surface of the traveling unit, wherein
among points on the electrode having a shortest distance from a center of the first peeling roll to the electrode traveling along the first side surface of the traveling unit, an upstreammost point P, and among points on the electrode having a shortest distance from a center of the second peeling roll to the electrode traveling along the second side surface of the traveling unit, a downstreammost point Q are different from each other, and
the traveling unit at the point P and the traveling unit at the point Q are located on different straight lines.

An exemplary embodiment of the present specification provides a lithium secondary battery including:
a pre-lithiated electrode manufactured by the above-described manufacturing apparatus;
a separator; and
an electrolyte solution.

Another exemplary embodiment of the present specification provides a battery module or a battery pack including the lithium secondary battery described above.

Still another exemplary embodiment of the present specification provides a battery pack including the battery module described above.

Further, yet another exemplary embodiment of the present specification provides a method for manufacturing a pre-lithiated electrode, including:
laminating a transfer laminate including a lithium metal layer and a base layer such that the lithium metal layer comes into contact with each of electrode active material layers provided on both surfaces of an electrode current collector layer;
first peeling of peeling the base layer from the transfer laminate laminated on the electrode active material layer provided on one surface of the electrode current collector layer; and
second peeling of peeling the base layer from the transfer laminate laminated on the electrode active material layer provided on the other surface of the electrode current collector layer, wherein
a point at which the first peeling starts and a point at which the second peeling starts are different from each other.

### [Advantageous Effects]

An apparatus for manufacturing a pre-lithiated electrode according to an exemplary embodiment described in the present specification can improve transfer characteristics by dividing peeling regions of a base layer and performing peeling during transfer-type pre-lithiation to suppress a phenomenon in which peeling between an electrode current collector layer and an electrode active material layer occurs on one surface of an electrode, thereby increasing a process speed of a pre-lithiated electrode and enabling application to mass production.

### [Brief Description of Drawings]

FIG. 1 is a diagram illustrating an apparatus for manufacturing a pre-lithiated electrode according to a Comparative Example.
FIG. 2 is a view illustrating results of experiments conducted to confirm that the transfer characteristics vary depending on a peeling subject.
FIG. 3 is a diagram illustrating a Comparative Example in which a traveling unit at a point P and the traveling unit at a point Q are located on the same straight line.
FIG. 4 is a diagram illustrating an Example in which the traveling unit at the point P and the traveling unit at the point Q are located on different straight lines.
FIG. 5 is a diagram illustrating an example of a first peeling unit 500 according to an exemplary embodiment of the present specification.
FIG. 6 is a diagram illustrating an example of a second peeling unit 600 according to an exemplary embodiment of the present specification.
FIGS. 7 and 8 are diagrams illustrating an example of an apparatus for manufacturing a pre-lithiated electrode according to an exemplary embodiment of the present specification, in which the first peeling unit 500 further includes a first tension-applying roll 500b.
FIG. 9 is a diagram illustrating points P, Q, and O and distances therebetween in the apparatus for manufacturing a pre-lithiated electrode according to an exemplary embodiment of the present specification.
FIG. 10 is a flowchart showing a method for manufacturing a pre-lithiated electrode according to an exemplary embodiment of the present specification.

### [Best Mode]

Before describing the present invention, some terms are first defined.

As used herein, when it is described that one part "includes", "comprises" or "has" one constituent element, unless otherwise specifically described, this does not mean that another constituent element is excluded, but means that another constituent element may be further included.

It will be further understood that the terms "comprises", "includes" or "have" when used in the present specification are intended to specify the presence of stated features, integers, steps, constitutional elements and/or combinations thereof, and are not intended to preclude the possibility of the presence or addition of one or more other features, integers, steps, constitutional elements, and/or combinations thereof.

In the present specification, when a part of a layer or the like is referred to as being "above" or "on" another part, it may be directly on the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In the present specification, when one member is referred to as being provided on "both surfaces" of another member, this means that one member is provided on one surface of another member, and one member is also provided on another surface corresponding to the one surface. In addition, this includes not only a case where one member is in direct contact with another member, but also a case where still another member is present between the two members.

In the present specification, 'p to q' means a range of 'p or more and q or less'.

In the present specification, the terms such as "~unit" and "device" refer to units for processing at least one function or operation.

As used herein, the singular forms of terms, such as "a" and "an", are intended to include the plural forms as well, unless the context clearly indicates otherwise.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

Hereinafter, preferred exemplary embodiments of the present invention will be described in detail. However, it should be understood that the exemplary embodiments of the present invention may be modified in various forms and the scope of the present invention is not limited to the exemplary embodiments described below.

### <Manufacturing Apparatus>

An apparatus for manufacturing a pre-lithiated electrode according to an exemplary embodiment of the present specification includes: a traveling unit along which an electrode having electrode active material layers on both surfaces of an electrode current collector layer travels; a lamination unit configured to laminate a transfer laminate including a lithium metal layer and a base layer such that the lithium metal layer comes into contact with each of the electrode active material layers, at a first side surface DR1 and a second side surface DR2 of the traveling unit; a first peeling unit including a first peeling roll configured to peel the base layer from the transfer laminate at the first side surface DR1 of the traveling unit; and a second peeling unit including a second peeling roll configured to peel the base layer from the transfer laminate at the second side surface DR2 of the traveling unit, wherein among points on the electrode having a shortest distance from a center of the first peeling roll to the electrode traveling along the first side surface DR1 of the traveling unit, an upstreammost point P, and among points on the electrode having a shortest distance from a center of the second peeling roll to the electrode traveling along the second side surface of the traveling unit, a downstreammost point Q are different from each other, and the traveling unit at the point P and the traveling unit at the point Q are located on different straight lines.

The apparatus for manufacturing a pre-lithiated electrode according to an exemplary embodiment of the present specification can compensate for irreversible capacity by pre-lithiating both surfaces of the electrode to prevent lithium loss, and thus can improve battery capacity or cycle performance.

In this case, the above-described pre-lithiation according to an exemplary embodiment of the present specification is performed by a dry transfer method through direct contact and pressurization of the lithium metal layer among pre-lithiation methods by a direct contact method, and since the method is applicable to a roll-to-roll process useful for mass production of electrodes compared to other methods, the process speed is high, making the method effective for mass production.

However, during the transfer method through direct contact of the lithium metal layer, since the lithium metal layer is a very thin film, the transfer is performed using a transfer laminate including a base layer for supporting the lithium metal layer. If the base layer is not peeled after the transfer, heat generated by a pre-lithiation reaction may be trapped between the base layer and the lithium metal layer (and/or an electrode active material layer), which may cause generation of by-products or thermal runaway. Therefore, after the transfer using the transfer laminate, the base layer is peeled, and during the peeling of the base layer, the transfer characteristics vary depending on a peeling subject.

Specifically, after the transfer laminate is transferred onto electrode active material layers provided on both surfaces of an electrode current collector layer, when the base layers on both surfaces are simultaneously peeled, a base layer on one surface starts to be peeled first, and the opposite side is lifted along. Consequently, a phenomenon may occur on the opposite surface in which the base layer is peeled while the electrode is held. Therefore, the present invention is characterized in that it can improve transfer characteristics by dividing peeling regions of a base layer and performing peeling to suppress a phenomenon in which peeling between an electrode current collector layer and an electrode active material layer occurs on one surface of an electrode.

Hereinafter, the present invention will be described in detail with reference to the drawings. However, it should be noted that the drawings are provided for illustrating the present invention, and the scope of the present invention is not limited by the drawings.

An apparatus for manufacturing a pre-lithiated electrode according to an exemplary embodiment of the present specification includes a traveling unit along which an electrode having electrode active material layers provided on both surfaces of an electrode current collector layer travels.

In the present specification, a "traveling unit" refers to a structure configured to cause an electrode 100 to travel along a process direction. Specifically, the traveling unit may include a pair of drive rolls at both end portions, and the traveling unit may cause the electrode 100 to travel through the pair of drive rolls. Specifically, the traveling unit may cause the electrode 100 to travel from a point at which an electrode active material layer starts to be provided at any one point of an electrode current collector layer until pre-lithiation is completed.

In an exemplary embodiment of the present specification, a traveling speed of the traveling unit may be 80 m/min or less, specifically 70 m/min or less, and 0.5 m/min or more, specifically 1 m/min or more.

The apparatus for manufacturing a pre-lithiated electrode according to an exemplary embodiment of the present specification may be used to perform a process in a roll-to-roll manner, and the components of the manufacturing apparatus may operate sequentially in the roll-to-roll process. In this case, the traveling speed of the traveling unit may refer to a progressing speed of the roll-to-roll process. That is, the progressing speed of the roll-to-roll process may fall within the above range throughout a process from a step of providing electrode active material layers on both surfaces of an electrode current collector layer to the first peeling unit or the second peeling unit.

In an exemplary embodiment of the present specification, when the traveling speed of the traveling unit falls within the above range, electrode active material layers can be uniformly provided on both surfaces of the electrode current collector layer and can be uniformly pre-lithiated, thereby preventing occurrence of defects in a pre-lithiated electrode.

The apparatus for manufacturing a pre-lithiated electrode according to an exemplary embodiment of the present specification includes a lamination unit 400 configured to laminate transfer laminates 200 each including a lithium metal layer (not illustrated) and a base layer 300 such that the lithium metal layers come into contact with the electrode active material layers, at a first side surface DR1 and a second side surface DR2 of the traveling unit.

In the present specification, a "lamination unit 400" refers to a structure configured to laminate a transfer laminate such that a lithium metal layer comes into contact with an electrode active material layer in order to prepare a pre-lithiation reaction of the electrode active material layer. The following description may be applied to the above lamination unit.

The apparatus for manufacturing a pre-lithiated electrode according to an exemplary embodiment of the present specification includes a first peeling unit 500 including a first peeling roll 500a configured to peel the base layer 300 from the transfer laminate 200 on the electrode 100 traveling along the first side surface DR1 of the traveling unit; and a second peeling unit 600 including a second peeling roll 600a configured to peel the base layer 300 from the transfer laminate 200 on the electrode 100 traveling along the second side surface DR2 of the traveling unit.

In this case, in the present specification, the "first side surface DR1" and the "second side surface DR2" refer to one side surface and an opposite side surface as divided relative to the traveling unit, and, for example, when the traveling unit is a straight line perpendicular to a gravity direction, the first side surface DR1 may refer to a side surface located opposite to the gravity direction and the second side surface DR2 may refer to a side surface located in the gravity direction, or vice versa, without being limited thereto.

Specifically, with reference to the drawings described below, a surface indicated by an arrow DR1 may be referred to as a first side surface, and a surface indicated by an arrow DR2 may be referred to as a second side surface, and, when the drawings are referenced, the first side surface DR1 and the second side surface DR2 indicate surfaces facing opposite directions.

Note that, in the present specification, a "traveling direction DR3" refers to a traveling direction of the entire process, and, with reference to the drawings, denotes a direction indicated by an arrow DR3 perpendicular to both the arrows DR1 and DR2. Additionally, when the traveling direction of the entire process is changed by a direction-changing member, a partial traveling direction DR3 at an arbitrary point may change.

In addition, in the present specification, the "peeling unit 500 or 600" refers to a structure configured to peel the base layer 300 from the transfer laminate 200, and the "peeling roll 500a or 600a" refers to a roll configured to rotate in a direction corresponding to the traveling direction DR3 of the electrode 100 traveling along the traveling unit and to pull and peel the base layer 300 from the transfer laminate 200.

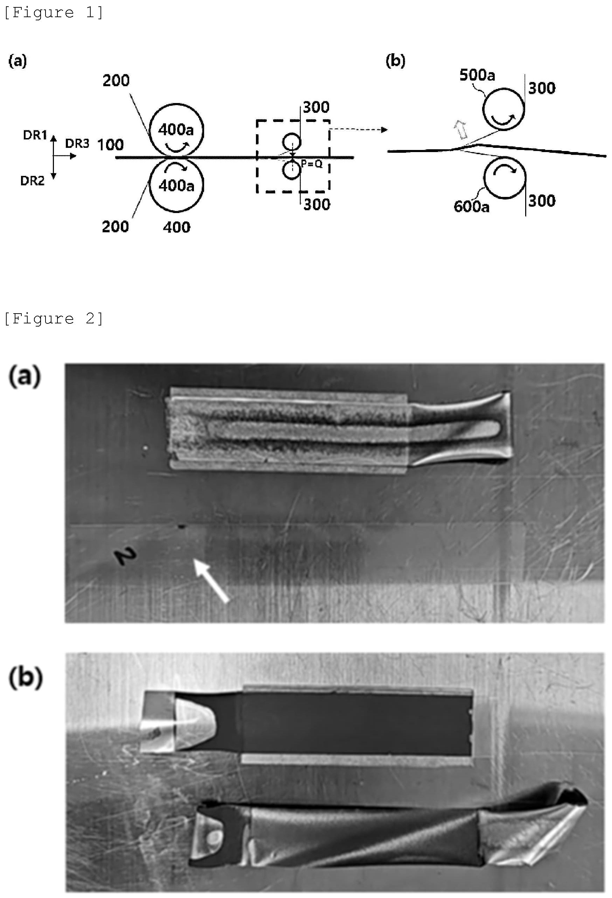

FIG. 1 is a diagram illustrating an apparatus for manufacturing a pre-lithiated electrode according to a comparative example in which the base layers 300 are simultaneously peeled at the first side surface DR1 and the second side surface DR2 of the traveling unit. Specifically, FIG. 1(a) illustrates an apparatus for manufacturing a pre-lithiated electrode in which among points on the electrode 100 having a shortest distance from a center of the first peeling roll 500a to the electrode 100 traveling along the traveling unit, an upstreammost point P, and among points on the electrode 100 having a shortest distance from a center of the second peeling roll 600a to the electrode 100 traveling along the traveling unit, a downstreammost point Q coincide with each other. In this case, referring to FIG. 1(b), which is an enlarged view of a portion where the base layers 300 are peeled (a portion indicated by a dashed box), it can be confirmed that, on the electrode 100 traveling along the first side surface DR1 of the traveling unit, the base layer 300 is held and peeled from the transfer laminate 200. However, it can be confirmed that on the electrode 100 traveling along the second side surface DR2 of the traveling unit, as the electrode 100 is lifted along in the peeling direction of the base layer 300 at the first side surface DR1, the base layer 300 is peeled from the transfer laminate 200 while the electrode 100 is held.

FIG. 2 illustrates experimental results obtained by simulating the phenomena occurring on the first side DR1 and the second side DR2 of FIG. 1(b), in order to confirm that transfer characteristics vary depending on which object is held during peeling, that is, depending on the peeling subject. Specifically, FIG. 2(a) illustrates a state immediately after the base layer 300 is peeled from the transfer laminate 200 while the base layer 300 is held, and shows that the base layer 300 is cleanly peeled from the transfer laminate 200.

On the other hand, FIG. 2(b) illustrates a state immediately after the base layer 300 is peeled from the transfer laminate 200 while the electrode is held, and shows that peeling occurs at an interface portion of the electrode 100 between an electrode current collector layer and an electrode active material layer, such that transfer of a lithium metal layer is not possible.

Specifically, in order to measure peeling forces in the cases of FIG. 2(a) and FIG. 2(b), the electrode 100 on which the transfer laminate 200 was laminated was cut to a width of 20 mm and fixed to glass using a double-sided tape, and then the peeling force was measured at a speed of 30 mm/min using a peeling force measuring device (AR-2000 available from Cheminstruments). As a result, the peeling force in the case of FIG. 2(a) was confirmed to be 1.3 gf/20 mm, and the peeling force in the case of FIG. 2(b) was confirmed to be 15 gf/20 mm, and it was confirmed that the peeling force in the case of FIG. 2(a), in which peeling was performed while holding the base layer 300, was considerably smaller, thereby making the process easier.

That is, it can be confirmed that peeling the base layer 300 from the transfer laminate 200 while holding the base layer 300 is effective in improving transfer characteristics and increasing process speed.

Therefore, through FIGS. 1 and 2, it can be confirmed that, in order to effectively peel only the base layer 300 from the transfer laminate 200, it is important to make peeling timings of the base layers 300 on both surfaces of the electrode 100 different. Accordingly, the apparatus for manufacturing a pre-lithiated electrode according to an exemplary embodiment of the present specification is characterized in that it can improve transfer characteristics by dividing peeling regions of the base layers 300 and performing peeling to suppress a phenomenon in which peeling between an electrode current collector layer and an electrode active material layer occurs only on one surface of the electrode 100. In addition, the apparatus is characterized by being applicable to mass production since the process speed of the pre-lithiated electrode can be increased when the transfer characteristics are improved.

That is, in the apparatus for manufacturing a pre-lithiated electrode according to an exemplary embodiment of the present specification, among points on the electrode 100 having a shortest distance from a center of the first peeling roll 500a to the electrode 100 traveling along the first side surface DR1 of the traveling unit, an upstreammost point P, and among points on the electrode 100 having a shortest distance from a center of the second peeling roll 600a to the electrode 100 traveling along the second side surface DR2 of the traveling unit, a downstreammost point Q should be different from each other.

In this case, in the present specification, the "point" refers to one point on a cross section cut perpendicular to the traveling direction DR3 of the entire process, but when the entire process is assumed to be represented on a three-dimensional (3D) plane, the one point may be represented as one straight line.

Note that the present invention can maximize the above-described effects by maintaining tension of the electrode 100, regardless of the surface of the electrode 100 from which the base layer 300 is peeled. When tension of the electrode 100 is maintained during peeling of the base layer 300 from the transfer laminate 200 on the electrode 100 located at the first side surface DR1 of the traveling unit, removal of the base layer 300 is further facilitated, and thereafter, also during peeling of the base layer 300 from the transfer laminate 200 on the electrode 100 located at the second side surface DR2 of the traveling unit, maintaining the tension of the electrode 100 prevents a phenomenon in which the base layer 300 is peeled from the transfer laminate 200 while holding the electrode 100, thereby improving transfer characteristics and increasing process speed.

Therefore, in the apparatus for manufacturing a pre-lithiated electrode according to an exemplary embodiment of the present specification, the traveling unit at the point P and the traveling unit at the point Q should be located on different straight lines, and thus, tension of the electrode 100 can be maintained regardless of a surface of the electrode 100 from which the base layer 300 is peeled.

If the traveling unit at the point P and the traveling unit at the point Q are located on the same straight line, it may be difficult to apply tension to the electrode 100. However, when the traveling unit at the point P and the traveling unit at the point Q are located on different straight lines, it becomes easy to apply tension to the electrode 100, and thus the effect described above can be maximized by maintaining tension of the electrode 100 regardless of the surface of the electrode 100 from which the base layer 300 is peeled. That is, by maintaining the tension of the electrode 100 when removing the base layers 300 from the transfer laminates 200 laminated on the electrode 100 traveling at the first side surface DR1 and the second side surface DR2 of the traveling unit, the phenomenon in which the base layer 300 is peeled from the transfer laminate 200 while holding the electrode 100 can be prevented, thereby improving the transfer characteristics and increasing the process speed.

In an exemplary embodiment of the present specification, the traveling unit at the point P and the traveling unit at the point Q being located on different straight lines may mean that a line extending in the traveling direction DR3 of the traveling unit at the point P and a line extending in the traveling direction DR3 of the traveling unit at the point Q are parallel to each other and spaced apart by a predetermined distance, or when not parallel, form a predetermined angle with each other.

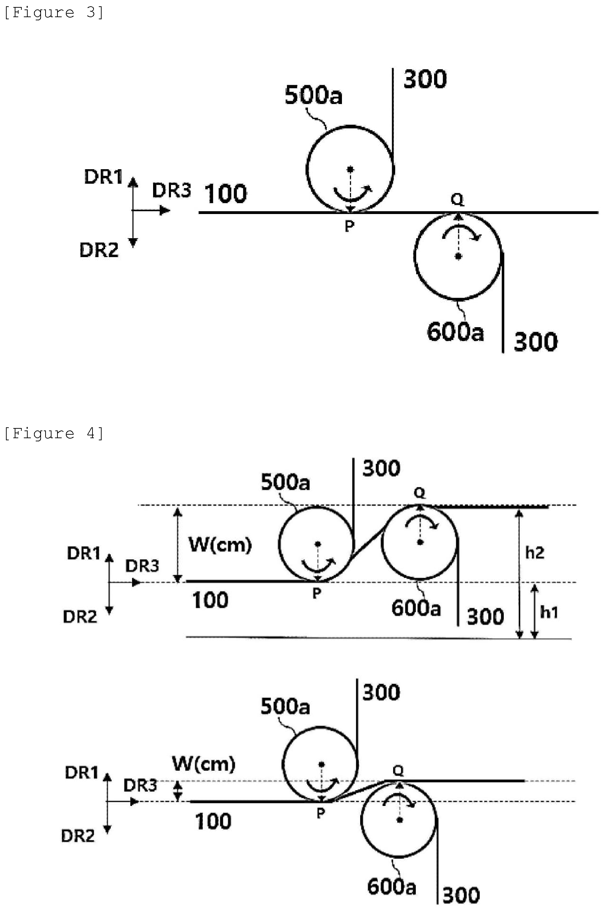

In an exemplary embodiment of the present specification, the line extending in the traveling direction DR3 of the traveling unit at the point P and the line extending in the traveling direction DR3 of the traveling unit at the point Q may be parallel to each other and spaced apart by a distance of greater than 0 cm, 0.5 m or more, or 1 cm or more, and 1000 cm or less, 500 cm or less, or 300 cm or less. In this case, the distance between the extension lines refers to W (cm) in FIGS. 4, 7 and 8.

In another exemplary embodiment of the present specification, when the line extending in the traveling direction DR3 of the traveling unit at the point P and the line extending in the traveling direction DR3 of the traveling unit at the point Q are not parallel to each other, an acute angle among angles formed by the extension lines may be greater than 0° and 90° or less, specifically, 10° or more and 60° or less, and more specifically, 15° or more and 45° or less.

In the apparatus for manufacturing a pre-lithiated electrode according to an exemplary embodiment of the present specification, the second peeling roll 600a may also serve as a tension-applying roll for maintaining tension of the electrode 100 after the base layer 300 is peeled in the first peeling unit 500.

Alternatively, in the apparatus for manufacturing a pre-lithiated electrode according to an exemplary embodiment of the present specification, the first peeling unit 500 may further include a first tension-applying roll 500b positioned between the first peeling roll 500a and the second peeling roll 600a and positioned at the second side surface DR2 of the traveling unit to maintain tension of the electrode 100 after the base layer 300 is peeled in the first peeling unit 500.

By including the tension-applying roll, the first tension-applying roll 500b or a second tension-applying roll 600b described below, the tension of the electrode can be maintained regardless of the electrode surface from which the base layer is peeled, which is more effective in improving transfer characteristics and increasing process speed.

In the apparatus for manufacturing a pre-lithiated electrode according to an exemplary embodiment of the present specification, the second peeling roll 600a may also serve as a tension-applying roll for maintaining tension of the electrode 100 after the base layer 300 is peeled in the first peeling unit 500.

In the present specification, the "tension-applying roll" refers to a structure configured to maintain tension of the electrode 100 after the base layer 300 is peeled. For example, tension may be applied to the electrode 100 by changing the traveling direction DR3 of the electrode 100 to a direction perpendicular to the traveling direction DR3 in the peeling unit. The tension-applying roll can maintain the tension of the electrode 100 regardless of the surface of the electrode 100 from which the base layer 300 is peeled, thereby further improving the transfer characteristics and increasing the process speed.

In an exemplary embodiment of the present specification, the second peeling roll 600a also serving as a tension-applying roll for maintaining tension of the electrode 100 after the base layer 300 is peeled in the first peeling unit 500 may mean that the second peeling roll 600a applies tension while peeling the base layer 300, and specifically may mean that the second peeling roll 600a is located at the second side surface DR2 of the traveling unit and applies tension to the electrode 100 for which the base layer 300 is peeled in the first peeling unit 500, while also peeling the base layer 300 in the second peeling unit 600.

Note that, in the case where the second peeling roll 600a also serves as a tension-applying roll, if the traveling unit at the point P and the traveling unit at the point Q are located on the same straight line, it may be difficult to apply tension to the electrode 100. However, when the traveling unit at the point P and the traveling unit at the point Q are located on different straight lines, it becomes easy to apply tension to the electrode 100, and thus, by maintaining the tension of the electrode 100 when removing the base layers 300 at the first side surface DR1 and the second side surface DR2 of the traveling unit, the phenomenon in which the base layer 300 is peeled from the transfer laminate 200 while holding the electrode 100 can be prevented, thereby improving the transfer characteristics and increasing the process speed.

FIGS. 3 and 4 are diagrams illustrating a case where the second peeling roll 600a also serves as a tension-applying roll. In this case, the first peeling roll 500a is illustrated as peeling the base layer 300 while being in contact with the base layer 300 before peeling; however, the first peeling roll 500a may be spaced apart from the base layer 300 before peeling by a predetermined distance, and no limitation is imposed in this regard.

Specifically, FIG. 3 is a diagram illustrating a comparative example in which the traveling unit at the point P and the traveling unit at the point Q are located on the same straight line, and FIG. 4 is a diagram illustrating an example in which the traveling unit at the point P and the traveling unit at the point Q are located on different straight lines.

As illustrated in FIG. 3, when the traveling unit at the point P and the traveling unit at the point Q are located on the same straight line, it can be confirmed that it is more difficult to apply tension to the electrode 100, as compared with the case of FIG. 4 in which the traveling units are located on different straight lines, such that a portion horizontally overlapping by an interval W (cm) is formed. That is, referring to FIG. 4, the apparatus for manufacturing a pre-lithiated electrode according to an exemplary embodiment of the present specification can easily apply tension to the electrode 100, because a line extending in the traveling direction DR3 of the traveling unit at the point P is located on a straight line spaced apart by an interval W (cm) from a line extending in the traveling direction DR3 of the traveling unit at the point Q, and the interval W may be greater than 0 cm and 1000 cm or less, specifically 0.5 m or more and 500 cm or less, and more specifically 1 cm or more and 300 cm or less.

In addition, referring to FIG. 4, in the apparatus for manufacturing a pre-lithiated electrode according to an exemplary embodiment of the present specification, a distance h1 from an arbitrary line to the line extending in the traveling direction DR3 of the traveling unit at the point P and a distance h2 from the arbitrary line to the line extending in the traveling direction DR3 of the traveling unit at the point Q may be different from each other.

In addition, referring to FIG. 4, in the apparatus for manufacturing a pre-lithiated electrode according to an exemplary embodiment of the present specification, the first peeling roll 500a and the second peeling roll 600a may be positioned to overlap each other in the traveling direction DR3, thereby allowing tension to be easily applied to the electrode 100.

In the apparatus for manufacturing a pre-lithiated electrode according to another exemplary embodiment of the present specification, the first peeling unit 500 may further include a first tension-applying roll 500b positioned between the first peeling roll 500a and the second peeling roll 600a and positioned at the second side surface DR2 of the traveling unit to maintain tension of the electrode 100 after the base layer 300 is peeled in the first peeling unit 500.

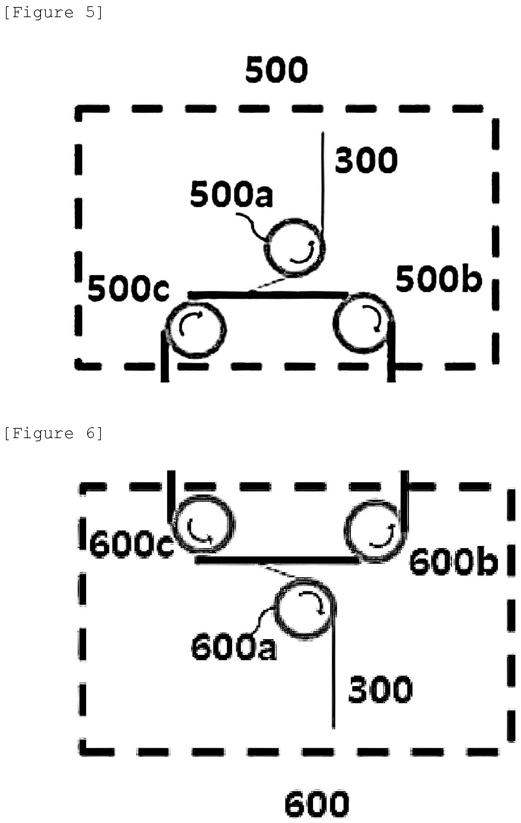

FIG. 5 is a diagram illustrating an example of the first peeling unit 500 according to an exemplary embodiment of the present specification. Referring to FIG. 5, it can be confirmed that the base layer 300 is peeled from the transfer laminate (not illustrated) laminated on the electrode 100 traveling at the first side surface DR1 of the traveling unit through the first peeling roll 500a located at the first side surface DR1 of the traveling unit.

In this case, the first peeling roll 500a is illustrated as being spaced apart by a predetermined distance from the electrode 100 traveling at the first side surface DR1 of the traveling unit and the transfer laminate (not illustrated) laminated on the electrode, but may also be positioned in contact therewith, and no limitation is imposed in this regard.

In addition, referring to FIG. 5, it can be confirmed that the first tension-applying roll 500b located at the second side surface DR2 of the traveling unit past the first peeling roll 500a serves to maintain tension such that the electrode 100 is prevented from being lifted along in a direction in which the base layer 300 is peeled at the first side surface DR1 of the traveling unit.

The first peeling unit 500 according to an exemplary embodiment of the present specification may further include a first guide roll 500c for guiding the traveling direction DR3 of the electrode 100 before the base layer 300 is peeled by the first peeling roll 500a.

In the present specification, the "guide roll" refers to a structure configured to guide the traveling direction DR3 of the electrode 100 or to change the traveling direction DR3, and specifically, the guide roll is positioned before the first peeling roll 500a of the first peeling unit 500 or between the first peeling roll 500a and the second peeling roll 600a, thereby guiding the traveling direction DR3 or changing the traveling direction DR3.

Referring to FIG. 5, it can be confirmed that the first guide roll 500c is positioned before the first peeling roll 500a and the first tension-applying roll 500b and at the second side surface DR2 of the traveling unit. The first guide roll 500c may serve to guide the traveling direction DR3 of the electrode 100 before the base layer 300 is peeled, and may also serve to apply tension to the electrode 100 together with the first tension-applying roll 500b.

When the first peeling unit 500 according to the exemplary embodiment of the present specification further includes the first tension-applying roll 500b, the traveling direction DR3 of the electrode 100 can be changed by the first tension-applying roll 500b, and in order to guide the changed traveling direction DR3 of the electrode 100 again, the second peeling unit 600 may further include a second guide roll 600c for guiding the traveling direction DR3 of the electrode 100 before the base layer 300 is peeled by the second peeling roll 600a.

FIG. 6 is a diagram illustrating an example of the second peeling unit 600 according to an exemplary embodiment of the present specification. Referring to FIG. 6, it can be confirmed that the base layer 300 is peeled from the transfer laminate (not illustrated) laminated on the electrode 100 traveling at the second side surface DR2 of the traveling unit through the second peeling roll 600a located at the second side surface DR2 of the traveling unit. In this case, the second peeling roll 600a is illustrated as being spaced apart by a predetermined distance from the electrode 100 traveling at the second side surface DR2 of the traveling unit and the transfer laminate (not illustrated) laminated on the electrode, but may also be positioned in contact therewith, and no limitation is imposed in this regard.

Referring to FIG. 6, it can be confirmed that the second guide roll 600c is positioned before the second peeling roll 600a and at the first side surface DR1 of the traveling unit. The second guide roll 600c may serve to guide the traveling direction DR3 of the electrode 100 before the base layer 300 is peeled, and may also serve to apply tension to the electrode 100 together with a second tension-applying roll 600b described below.

That is, in the apparatus for manufacturing a pre-lithiated electrode according to an exemplary embodiment of the present specification, the second peeling unit 600 may further include a second guide roll 600c for guiding the traveling direction of the electrode 100 before the base layer 300 is peeled by the second peeling roll 600a.

In the apparatus for manufacturing a pre-lithiated electrode according to an exemplary embodiment of the present specification, the second peeling unit 600 may further include a second tension-applying roll 600b positioned at the first side surface DR1 of the traveling unit to maintain the tension of the electrode 100 after the base layer 300 is peeled in the second peeling unit 600, and accordingly, tension of the electrode can be maintained regardless of an electrode surface from which the base layer is peeled, thereby further improving transfer characteristics and increasing process speed.

Referring to FIG. 6, it can be confirmed that the second tension-applying roll 600b, which is an additional tension-applying roll positioned at the first side surface DR1 of the traveling unit past the second peeling roll 600a, serves to maintain the tension of the electrode 100 such that the electrode 100 is prevented from being carried along in a direction in which the base layer 100 is peeled at the second side surface DR2 of the traveling unit.

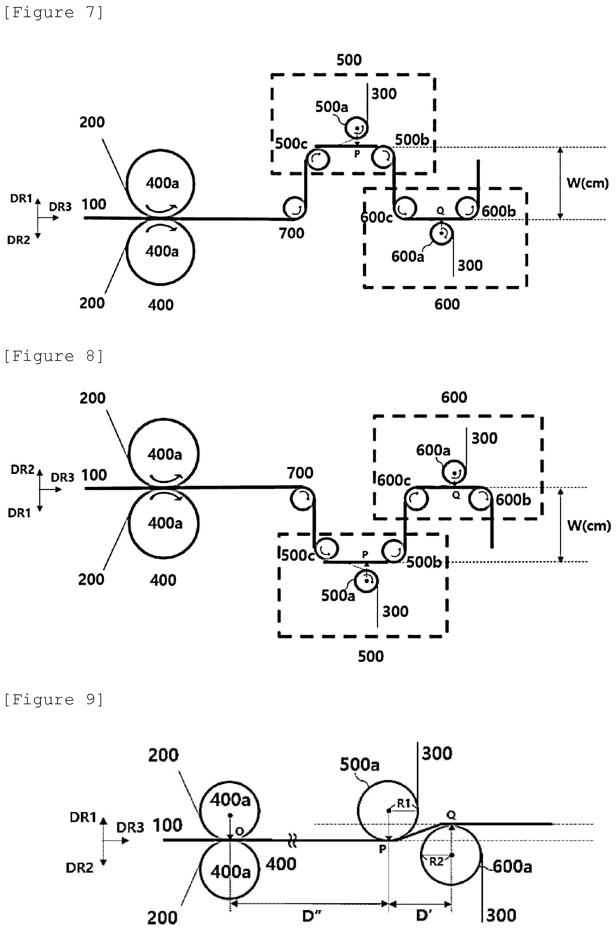

In an exemplary embodiment of the present specification, when the first peeling unit 500 further includes the first tension-applying roll 500b, the line extending in the traveling direction DR3 of the traveling unit at the point Q and the line extending in the traveling direction DR3 of the traveling unit at the point P may be parallel to each other and spaced apart by a distance of greater than 0 cm. Since the traveling direction DR3 of the electrode is changed due to the first tension-applying roll 500b, the line extending in the traveling direction DR3 of the traveling unit at the point P above is inevitably positioned spaced apart by a predetermined distance from the line extending in the traveling direction DR3 of the traveling unit at the point Q, and the distance is indicated as W (cm) in FIGS. 7 and 8.

That is, when the first peeling unit 500 includes the first tension-applying roll 500b, the traveling direction DR3 of the electrode is changed by the first tension-applying roll 500b, and, consequently, the traveling unit at the point Q may be positioned on a straight line spaced apart by the distance W (cm) from the traveling unit at the point P, and the W may be greater than 0 cm and 1000 cm or less, specifically, 0.5 m or more and 500 cm or less, and more specifically, 1 cm or more and 300 cm or less.

FIGS. 7 and 8 are diagrams illustrating an example of the apparatus for manufacturing a pre-lithiated electrode according to an exemplary embodiment of the present specification, in which the first peeling unit 500 further includes the first tension-applying roll 500b. Specifically, FIGS. 7 and 8 illustrate an apparatus for manufacturing a pre-lithiated electrode including an electrode 100 having electrode active material layers (not illustrated) provided on both surfaces of an electrode current collector layer (not illustrated) and traveling along a traveling unit, a lamination unit 400 that laminates transfer laminates 200 on the electrode active material layers (not illustrated) at a first side surface DR1 and a second side surface DR2 of the traveling unit, a first peeling unit 500, and a second peeling unit 600.

In this case, referring to FIGS. 7 and 8, the lamination unit 400 may include transfer rolls 400a that bring the transfer laminates 200 into contact with the electrode active material layers (not illustrated) through transfer rolls 400a at the first side surface DR1 and the second side surface DR2 of the traveling unit, and FIGS. 7 and 8 illustrate that the transfer rolls 400a also serve to press the electrode active material layers in contact with the transfer laminates 200; however, the lamination unit may further include a separate pressing roll (not shown), and no limitation is imposed in this regard.

Referring to the first peeling unit 500 illustrated in FIG. 7, it can be confirmed that the base layer 300 is peeled, through the first peeling roll 500a located at the first side surface DR1 of the traveling unit, from the transfer laminate 200 laminated on the electrode 100 traveling at the first side surface DR1 of the traveling unit. In this case, the first peeling roll 500a is illustrated as being spaced apart by a predetermined distance from the electrode 100 traveling at the first side surface DR1 of the traveling unit and the transfer laminate (not illustrated) laminated on the electrode, but may also be positioned in contact therewith, and no limitation is imposed in this regard.

In addition, it can be confirmed that the first tension-applying roll 500b located at the second side surface DR2 of the traveling unit past the first peeling roll 500a serves to maintain tension of the electrode 100 such that the electrode 100 is prevented from being lifted along in a direction in which the base layer 300 is peeled at the first side surface DR1 of the traveling unit.

In addition, the apparatus for manufacturing a pre-lithiated electrode according to FIG. 7 further includes a first guide roll 500c positioned before the first peeling roll 500a and provided at the second side surface DR2 of the traveling unit, and the first guide roll 500c may serve to guide the traveling direction DR3 of the electrode 100 before the base layer 300 is peeled, and may also serve to apply tension to the electrode 100 together with the first tension-applying roll 500b. In this case, the apparatus for manufacturing a pre-lithiated electrode according to FIG. 7 may further include a direction-changing member 700 for changing the traveling direction DR3 of the electrode 100 traveling along the traveling unit toward a direction in which the first guide roll 500c is positioned.

That is, in the apparatus for manufacturing a pre-lithiated electrode according to an exemplary embodiment of the present specification, the first peeling unit 500 may further include a first guide roll 500c for guiding the traveling direction of the electrode 100 before the base layer 300 is peeled by the first peeling roll 500a.

Referring to the second peeling unit 600 illustrated in FIG. 7, it can be confirmed that the base layer 300 is peeled, through the second peeling roll 600a located at the second side surface DR2 of the traveling unit, from the transfer laminate 200 laminated on the electrode 100 traveling at the second side surface DR2 of the traveling unit. In this case, the second peeling roll 600a is illustrated as being spaced apart by a predetermined distance from the electrode 100 traveling at the second side surface DR2 of the traveling unit and the transfer laminate (not illustrated) laminated on the electrode, but may also be positioned in contact therewith, and no limitation is imposed in this regard.

In addition, the apparatus for manufacturing a pre-lithiated electrode according to FIG. 7 further includes a second tension-applying roll 600b positioned at the first side surface DR1 of the traveling unit past the second peeling roll 600a, and the second tension-applying roll 600b serves to maintain tension of the electrode 100 such that the electrode 100 is prevented from being carried along in a direction in which the base layer 300 is peeled at the second side surface DR2 of the traveling unit.

In addition, the apparatus for manufacturing a pre-lithiated electrode according to FIG. 7 may further include a second guide roll 600c positioned before the second peeling roll 600a and provided at the first side surface DR1 of the traveling unit, and the second guide roll 600c may serve to guide the traveling direction DR3 of the electrode 100 before the base layer 300 is peeled, and may also serve to apply tension to the electrode together with the second tension-applying roll 600b.

That is, the apparatus for manufacturing a pre-lithiated electrode according to FIG. 7 can apply tension to the electrode 100 while simultaneously changing the traveling direction DR3 of the traveling unit 100 through the first tension-applying roll 500b and the second guide roll 600c, thereby improving the transfer characteristics and increasing the process speed. In this case, the apparatus for manufacturing a pre-lithiated electrode according to an exemplary embodiment of the present specification includes the first tension-applying roll 500b and the second guide roll 600c, and thus it can be confirmed that a line extending in the traveling direction DR3 of the traveling unit at the point Q and a line extending in the traveling direction DR3 of the traveling unit at the point P are parallel to each other and spaced apart by a distance (W) of greater than 0 cm.

FIG. 7 illustrates a case in which, assuming that the traveling unit is a straight line perpendicular to a gravity direction, the first side surface DR1 is a side surface located opposite to the gravity direction and the second side surface DR2 is a side surface located in the gravity direction, whereas FIG. 8 illustrates a case in which the first side surface DR1 is a side surface located in the gravity direction and the second side surface DR2 is a side surface located opposite to the gravity direction. There is no limitation as long as opposite side surfaces are illustrated, and the description of FIG. 7 may be applied in the same manner. In this case, the direction-changing member 700 illustrated in FIG. 8 serves to change the traveling direction DR3 of the traveling unit toward a direction in which the first guide roll 500c is positioned.

The apparatus for manufacturing a pre-lithiated electrode according to FIG. 8 can apply tension to the electrode 100 while simultaneously changing the traveling direction DR3 of the traveling unit 100 through the first tension-applying roll 500b and the second guide roll 600c, thereby improving the transfer characteristics and increasing the process speed. In this case, the apparatus for manufacturing a pre-lithiated electrode according to an exemplary embodiment of the present specification includes the first tension-applying roll 500b and the second guide roll 600c, and thus it can be confirmed that a line extending in the traveling direction DR3 of the traveling unit at the point P and a line extending in the traveling direction DR3 of the traveling unit at the point Q are parallel to each other and spaced apart by a distance (W) of greater than 0 cm.

In an exemplary embodiment of the present specification, a distance D' between the point P and the point Q may be greater than a sum of a radius R1 of the first peeling roll 500a and a radius R2 of the second peeling roll 600a.

That is, by arranging the first peeling roll 500a and the second peeling roll 600a to be spaced apart by an appropriate distance, separations of the base layers do not occur simultaneously at the first side surface DR1 and the second side surface DR2 of the traveling unit, thereby improving transfer characteristics.

The radius R1 of the first peeling roll 500a according to an exemplary embodiment of the present specification may be 0.1 cm or more and 20 cm or less, specifically 0.5 cm or more and 15 cm or less, and more specifically 1 cm or more and 10 cm or less.

The radius R2 of the second peeling roll 600a according to an exemplary embodiment of the present specification may be 0.1 cm or more and 20 cm or less, specifically 0.5 cm or more and 15 cm or less, and more specifically 1 cm or more and 10 cm or less.

In addition, in an exemplary embodiment of the present specification, a distance D" from a point O extending perpendicularly from a center of the transfer roll 400a to the electrode 100 traveling along the traveling unit in the lamination unit 400 to a closer one of the points P and Q may be 1 cm or more and 300 cm or less, specifically 5 cm or more and 100 cm or less, and more specifically 8 cm or more and 70 cm or less.

When the distance D" according to an exemplary embodiment of the present specification falls within the above range, a sufficient pre-lithiation reaction can occur, and heat dissipation may not be suppressed by the base layer 300.

FIG. 9 is a diagram illustrating points P, Q, and O and distances therebetween in the apparatus for manufacturing a pre-lithiated electrode according to an exemplary embodiment of the present specification.

Specifically, referring to FIG. 9, the distance D' between the point P and the point Q may be greater than the sum of the radius R1 of the first peeling roll 500a and the radius R2 of the second peeling roll 600a.

In addition, referring to FIG. 9, the distance D" from the point O extending perpendicularly from the center of the transfer roll 400a to the electrode 100 traveling along the traveling unit in the lamination unit 400 to a closer point P of the points P and Q may fall within the above range.

The apparatus for manufacturing a pre-lithiated electrode according to an exemplary embodiment of the present specification may further include a direction-adjusting member 700 that adjusts the traveling direction DR3 of the electrode 100 traveling along the traveling unit between the lamination unit 400 and the first peeling unit 500 or the second peeling unit 600.

The following describes the lamination unit 400 according to an exemplary embodiment of the present specification.

In an exemplary embodiment of the present specification, the transfer laminate 200 includes a lithium metal layer (not illustrated). In this case, the lithium metal layer (not illustrated) is a layer including lithium metal for pre-lithiating at least one surface of the electrode active material layer, and a commonly used Li metal foil may be used, but no limitation is imposed in this regard.

In an exemplary embodiment of the present specification, a thickness of the lithium metal layer (not illustrated) may be 10 µm or less, specifically 8 µm or less, and more specifically 6.5 µm or less, and greater than 0 µm, specifically 0.5 µm or more, and more specifically 1 µm or more.

When the thickness of the lithium metal layer according to an exemplary embodiment of the present specification falls within the above range, the irreversible capacity during charging and discharging of a lithium secondary battery can be sufficiently compensated.

In an exemplary embodiment of the present specification, the transfer laminate 200 includes a base layer 300.

Specifically, the transfer laminate 200 according to an exemplary embodiment of the present specification may be one in which a lithium metal layer (not illustrated) and a base layer 300 are sequentially stacked.

In an exemplary embodiment of the present specification, the base layer 300 may be used without limitation as long as it has the characteristics of being capable of withstanding process conditions such as high temperatures during a step of depositing the lithium metal layer (not illustrated) and preventing the problem of reverse peeling, where the lithium metal layer (not illustrated) is transferred onto the base layer 300 during a winding process for transferring the deposited lithium metal layer (not illustrated).

Specifically, in an exemplary embodiment of the present specification, the base layer 300 may include one or more selected from the group consisting of polyethylene terephthalate (PET), polyimide (PI), poly(methylmethacrylate) (PMMA), polypropylene, polyethylene, and polycarbonate.

In an exemplary embodiment of the present specification, a thickness of the base layer 300 may fall within a range of 1 µm or more and 300 µm or less, specifically 5 µm or more and 200 µm or less, and more specifically 10 µm or more and 100 µm or less.

When the thickness of the base layer 300 falls within the above range, the transfer of lithium metal to the electrode active material layer can occur efficiently, and the reverse transfer can be prevented.

In an exemplary embodiment of the present specification, the transfer laminate 200 may further include a release layer, and the transfer laminate 200 may be one in which the lithium metal layer (not illustrated), the release layer, and the base layer 300 are sequentially stacked.

In an exemplary embodiment of the present specification, the release layer may be one or more selected from the group consisting of polycarbonate (PC), polydimethylsiloxane (PDMS), polymethylhydrosiloxane (PMHS), polyimide (PI), and polymethylmethacrylate (PMMA).

In an exemplary embodiment of the present specification, a thickness of the release layer may be 0.1 µm or more and 5 µm or less, specifically 0.2 µm or more and 3 µm or less, and more specifically 0.5 µm or more and 1 µm or less.

In an exemplary embodiment of the present specification, when the thickness of the release layer falls within the above range, sufficient release force can be secured, and the release layer positioned on a surface after transfer of the lithium metal layer (not illustrated) does not serve to block heat release, thereby preventing accelerated formation of by-products.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer may be used.

In an exemplary embodiment of the present specification, the lamination unit 400 may include a transfer roll 400a that transfers the transfer laminate 200 including the lithium metal layer (not illustrated) and the base layer 300 such that the lithium metal layer (not illustrated) comes into contact with the electrode active material layer.

In an exemplary embodiment of the present specification, the transfer roll 400a is a structure configured to cause the electrode active material layer and the transfer laminate 200 to come into contact simultaneously at any point at which contact between the transfer roll 400a and the transfer laminate 200 begins. This is a configuration for performing pre-lithiation by transferring lithium metal to the electrode active material layer, and specifically, pre-lithiation of the electrode active material layer may proceed from a moment at which the transfer laminate 200 is brought into contact such that the lithium metal layer (not illustrated) comes into contact with the electrode active material layer, through the transfer roll 400a.

In an exemplary embodiment of the present specification, pre-lithiation may proceed from a moment at which the transfer laminate 200 comes into contact with the electrode active material layer, which may be represented by a pre-lithiation reaction due to the high reactivity of the lithium metal layer before an activation process.

In an exemplary embodiment of the present specification, the transfer roll 400a may also serve as a pressing roll configured to press the electrode active material layer and the transfer laminate 200, or may further include a separate pressing roll. Specifically, the transfer roll 400a according to an exemplary embodiment of the present specification may also serve as a pressing roll configured to press the electrode active material layer and the transfer laminate 200.

In the present specification, the pressing roll (not illustrated) is a structure configured to press the transfer laminate 200 in contact with the electrode active material layer.

In an exemplary embodiment of the present specification, a pressing load of the pressing roll (not illustrated) may be greater than 200 kgf, 250 kgf or more, 300 kgf or more, 350 kgf or more, or 400 kgf or more, and 600 kgf or less, 500 kgf or less, or 450 kgf or less.

In an exemplary embodiment of the present specification, when the pressing load of the pressing roll (not illustrated) falls within the above range, pre-lithiation by transfer can proceed more actively, and at the same time, pre-lithiation progresses within an appropriate range, thereby making it possible to minimize residual lithium on the surface of the electrode 100 and loss of lithium introduced. In addition, the electrode thickness can be formed thin despite the high energy density.

### <Manufacturing Method>

Another exemplary embodiment of the present specification provides a method for manufacturing a pre-lithiated electrode, including:
a step of laminating a transfer laminate including a lithium metal layer and a base layer such that the lithium metal layer comes into contact with each of electrode active material layers provided on both surfaces of an electrode current collector layer;
a first peeling step of peeling the base layer from the transfer laminate laminated on the electrode active material layer provided on one surface of the electrode current collector layer; and
a second peeling step of peeling the base layer from the transfer laminate laminated on the electrode active material layer provided on the other surface of the electrode current collector layer, wherein points on the transfer laminate at which the first and second peeling steps start may be different from each other.

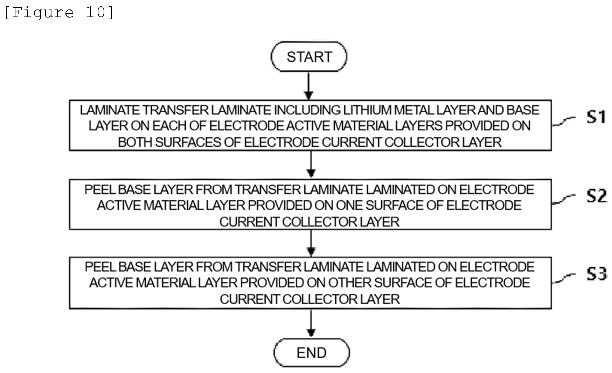

FIG. 10 is a flowchart showing a method for manufacturing a pre-lithiated electrode according to an exemplary embodiment of the present specification. Specifically, FIG. 10 illustrates a method for manufacturing a pre-lithiated electrode, including a step (S1) of laminating a transfer laminate including a lithium metal layer and a base layer on each of electrode active material layers provided on both surfaces of an electrode current collector layer; a step (S2) of peeling the base layer from the transfer laminate laminated on the electrode active material layer provided on one surface of the electrode current collector layer; and a step (S3) of peeling the base layer from the transfer laminate laminated on the electrode active material layer provided on the other surface of the electrode current collector layer.

In this case, although not illustrated in FIG. 10, a tension-applying step for maintaining tension of the electrode after the base layer is peeled may be further included between the steps S2 and S3.

In addition, although not illustrated in FIG. 10, a step of preparing a transfer laminate according to an exemplary embodiment of the present specification may be performed in a step before the step S1, and a step of providing electrode active material layers on both surfaces of an electrode current collector layer before or simultaneously with the step of preparing the transfer laminate may be further included.

In the method for manufacturing a pre-lithiated electrode according to another exemplary embodiment of the present specification, the descriptions of the lamination unit, the first peeling unit, the second peeling unit, and the tension-applying roll described above may be applied to the lamination step, the first peeling step, the second peeling step, and the tension-applying step in the same manner.

In the method for manufacturing a pre-lithiated electrode according to another exemplary embodiment of the present specification, the first peeling step and the second peeling step may be performed on different straight lines.

In addition, the method for manufacturing a pre-lithiated electrode according to another exemplary embodiment of the present specification may further include a tension-applying step for maintaining tension of the electrode after the base layer is peeled between the first peeling step and the second peeling step.

### <Lithium Secondary Battery>

A lithium secondary battery according to an exemplary embodiment of the present specification may include a pre-lithiated electrode manufactured by the manufacturing apparatus according to the above-described exemplary embodiment, a separator, and an electrolyte solution, wherein the electrode is a negative electrode or a positive electrode.

The negative electrode is manufactured by applying and drying a negative electrode slurry including a negative electrode active material on at least one surface of a negative electrode current collector layer, and, if necessary, the negative electrode slurry may further include additional components such as a conductive material, a binder, and a solvent.

The positive electrode is manufactured by applying and drying a positive electrode slurry including a positive electrode active material on at least one surface of a positive electrode current collector layer, and, if necessary, the positive electrode slurry may further include additional components such as a conductive material, a binder, and a solvent.

The separator may include a porous polymer base material and an organic/inorganic composite porous coating layer formed on at least one surface of the polymer base material, and the organic/inorganic composite porous coating layer may include particulate binder resins and inorganic particles.

The electrolyte solution may include an organic liquid electrolyte solution, an inorganic liquid electrolyte solution, a solid polymer electrolyte solution, a gel-type polymer electrolyte solution, a solid inorganic electrolyte solution, and a molten inorganic electrolyte solution, which can be used in the manufacture of a lithium secondary battery, and specifically, may include a nonaqueous organic solvent and a metal salt.

The types of the negative active material, the positive active material, the additional components, the separator, and the electrolyte solution, and the manufacturing methods of the positive electrode and the negative electrode may be used without limitation as long as they are known in the art within a scope to which the above-described description applies.

A battery module or battery pack according to an exemplary embodiment of the present specification may include the lithium secondary battery described above.

A battery pack according to another exemplary embodiment of the present specification may include a battery module including the lithium secondary battery described above.

Since the lithium secondary battery according to the exemplary embodiments of the present specification stably exhibits excellent discharge capacity, output characteristics and cycle performance, it can be used as a power source for a portable device such as a mobile phone, a laptop computer, and a digital camera, as well as a medium to large sized device selected from the group consisting of an electric vehicle, a hybrid electric vehicle, a plug-in hybrid electric vehicle, and a power storage system. For example, the battery module or battery pack may be used as a power source for one or more medium to large sized devices, such as a power tool; an electric car such as an electric vehicle (EV), a hybrid electric vehicle, and a plug-in hybrid electric vehicle (PHEV); or a power storage system.

### <Explanation of Reference Numerals and Symbols>

100: electrode
200: transfer laminate
300: base layer
400: lamination unit
400a: transfer roll
500: first peeling unit
500a: first peeling roll
500b: first tension-applying roll
500c: first guide roll
600: second peeling unit
600a: second peeling roll
600b: second tension-applying roll
600c: second guide roll
700: direction-changing member
DR1: first side surface
DR2: second side surface
DR3: traveling direction

## Claims

1. An apparatus for manufacturing a pre-lithiated electrode, comprising:
a traveling unit along which an electrode having electrode active material layers on both surfaces of an electrode current collector layer travels;
a lamination unit configured to laminate a transfer laminate comprising a lithium metal layer and a base layer such that the lithium metal layer comes into contact with each of the electrode active material layers, at a first side surface and a second side surface of the traveling unit;
a first peeling unit comprising a first peeling roll configured to peel the base layer from the transfer laminate at the first side surface of the traveling unit; and
a second peeling unit comprising a second peeling roll configured to peel the base layer from the transfer laminate at the second side surface of the traveling unit, wherein
among points on the electrode having a shortest distance from a center of the first peeling roll to the electrode traveling along the first side surface of the traveling unit, an upstreammost point P, and among points on the electrode having a shortest distance from a center of the second peeling roll to the electrode traveling along the second side surface of the traveling unit, a downstreammost point Q are different from each other, and
the traveling unit at the point P and the traveling unit at the point Q are located on different straight lines.

2. The apparatus of claim 1, wherein the traveling unit at the point P and the traveling unit at the point Q being located on different straight lines comprises a case in which a line extending in a traveling direction of the traveling unit at the point P and a line extending in a traveling direction of the traveling unit at the point Q are parallel to each other and spaced apart by a predetermined distance, or when not parallel, form a predetermined angle with each other.

3. The apparatus of claim 1, wherein the second peeling roll also serves as a tension-applying roll to maintain tension of the electrode after the base layer is peeled in the first peeling unit.

4. The apparatus of claim 1, wherein the first peeling unit further comprises a first tension-applying roll positioned between the first peeling roll and the second peeling roll and at the second side surface of the traveling unit to maintain tension of the electrode after the base layer is peeled in the first peeling unit.

5. The apparatus of claim 4, wherein the second peeling unit further comprises a second guide roll for guiding a traveling direction of the electrode before the base layer is peeled by the second peeling roll.

6. The apparatus of claim 1, wherein a line extending in a traveling direction of the traveling unit at the point P and a line extending in a traveling direction of the traveling unit at the point Q are parallel to each other and spaced apart by a distance of greater than 0 cm.

7. The apparatus of claim 1, wherein the second peeling unit further comprises a second tension-applying roll positioned at the first side surface of the traveling unit to maintain tension of the electrode after the base layer is peeled in the second peeling unit.

8. The apparatus of claim 1, wherein the first peeling unit further comprises a first guide roll for guiding a traveling direction of the electrode before the base layer is peeled by the first peeling roll.

9. The apparatus of claim 1, wherein
the lamination unit comprises a transfer roll configured to transfer the transfer laminate comprising the lithium metal layer and the base layer such that the lithium metal layer comes into contact with each of the electrode active material layers, and
the transfer roll also serves as a pressing roll configured to press the electrode active material layers and the transfer laminate, or further comprises a separate pressing roll.

10. A lithium secondary battery comprising:
a pre-lithiated electrode manufactured by the manufacturing apparatus of any one of claims 1 to 9;
a separator; and
an electrolyte solution.

11. A battery module comprising the lithium secondary battery of claim 10.

12. A battery pack comprising the lithium secondary battery of claim 10.

13. A battery pack comprising the battery module of claim 11.

14. A method for manufacturing a pre-lithiated electrode, comprising:
laminating a transfer laminate comprising a lithium metal layer and a base layer such that the lithium metal layer comes into contact with each of electrode active material layers provided on both surfaces of an electrode current collector layer;
first peeling of peeling the base layer from the transfer laminate laminated on the electrode active material layer provided on one surface of the electrode current collector layer; and
second peeling of peeling the base layer from the transfer laminate laminated on the electrode active material layer provided on the other surface of the electrode current collector layer, wherein
a point on the transfer laminate at which the first peeling starts and a point on the transfer laminate at which the second peeling starts are different from each other.

15. The method of claim 14, wherein the first peeling and the second peeling are performed in different straight lines.

16. The method of claim 14, further comprising a tension applying of maintaining tension of the electrode after the base layer is peeled, between the first peeling and the second peeling.
